# EUROPEAN PATENT SPECIFICATION

(11) **EP 3 861 832 B1**
(45) Date of publication and mention of the grant of the patent: **30.08.2023**
(21) Application number: 20836923.1
(22) Date of filing: 09.07.2020
(51) Int. Cl.: B65D 81/34, A23L 25/00, H05B 6/64, A23L 5/10, A47J 27/02

(54) **METHOD AND PACKAGE FOR EVENLY ROASTING SEEDS IN A MICROWAVE**
VERFAHREN UND VERPACKUNG ZUM GLEICHMÄSSIGEN RÖSTEN VON KÖRNERN IN EINER MIKROWELLE
PROCÉDÉ ET EMBALLAGE POUR LA TORRÉFACTION UNIFORME DE GRAINES DANS UN FOUR À MICRO-ONDES

(30) Priority: 10.07.2019 US 201962872433 P; 22.08.2019 IT 201900014940; 26.12.2019 US 201962953870 P
(43) Date of publication of application: 11.08.2021
(73) Proprietor: Eazy Roast Ltd., 7406839 Ness Ziona (IL)
(72) Inventor: ALMOG, Yaacov, 7406839 Ness Ziona (IL)
(74) Representative: ABG Intellectual Property Law, S.L.
(86) International application number: PCT/IL2020/050766
(87) International publication number: WO 2021/005602

(56) References cited:
- WO-A2-00/61456
- US-A- 4 132 811
- US-A- 4 283 427
- US-A- 4 596 713
- US-A- 5 317 120
- US-A- 5 919 390
- US-A1- 2004 169 037
- US-A1- 2019 002 183
- US-B1- 6 359 272
- US-B1- 6 436 457
- US-B2- 8 435 584
- US-B2- 9 737 085

## Description

### FIELD OF THE INVENTION

The present invention relates in general to microwave cooking, in particular to a package suitable for roasting seeds and nuts in a microwave, and method thereof.

### BACKGROUND OF THE INVENTION

Today, nearly every home has a microwave and is being used for cooking foodstuff using microwave energy. At the same time, a wide variety of packages have been developed for microwave cooking, designed to utilize the microwave energy to heat and cook the foodstuff inside the package. For example, US 5,097,107, US 5,008,024, US 5,044,777, and US 4,571,337, describe preparation of popcorn in a microwave using various packaging, which are designed to evenly distribute microwave heat across the package to maximize popping of the popcorn kernels. Most microwavable popcorn bags are made of Kraft paper, which was found suitable for utilizing microwave energy to cook foodstuff. Some bags also contain some polymeric inner-layer.

US 4,267,420 describes a microwave package that assists in transferring microwave heat into thermal heat, which aids in evenly cooking foodstuff inside the package.

It is known that the molecular friction resulting from the high frequency oscillation of microwave ovens fails to impart the proper amount of crispness to foodstuff normally expected to possess such a quality. As a result, when such foods are heated in a microwave oven, the resultant foodstuff often lacks the desired crispness. This is especially problematic with foodstuff that has low water content, such as seeds and nuts. Various attempts were made to develop means for efficiently roasting seeds and nuts in a manner that provide even roasting and minimum burning thereof during microwave heating.

However, so far, no solution has been found to be an efficient for roasting seeds and nuts, shelled or unshelled, in a microwave oven in a manner that produces an appealing texture and crunchiness. Notably, microwave roasting of seeds and nuts presents a unique challenge because the microwave heat must be utilized precisely to achieve the desired aroma, texture and crunchiness of the roasted product in an even manner so to avoid burning some while insufficiently roasting others. Another complication is that, nuts or seeds that are tightly packed together tend to roast unevenly in a microwave, so a suitable microwave package should allow enough room for proper roasting, while still providing adequate amounts of product for consumption.

ES 216261 relates to a food product rapped in a microwave-resistant bag suitable for cooking in a microwave oven. The food product in ES 216261 is a processed product having a high composition of wheat flour or potato starch for better expansion of the product in the microwave oven. ES 2034249 describes microwave cooking using chemically modified starch to decrease the deterioration of taste of cooked food after microwave heating. CN 101301098 describes a method for drying whole grain nuts in a microwave.

Further packages and methods are known from US2019/002183 and WO00/61456.

However, all known processes and packages of the prior art have limitations and drawbacks, mainly in the characteristics of the resultant roasted seeds and nuts.

Microwave roasting of seeds and nuts, such as almonds, pistachios, pine nuts, watermelon seeds, sunflower seeds, pumpkin seeds, hazelnut, pecans, chestnuts, etc., is a desirable objective, since the conventional method of roasting them is time consuming and requires advanced planning and experience. Furthermore, the ability to roast seeds and nuts on demand is more desirable than purchasing pre-roasted seeds and nuts, because (a) raw seeds and nuts have a longer shelf life and (b) they taste better immediately after being roasted.

Thus, there is a need for a package and method for roasting a variety of seeds and nuts in a microwave oven.

### SUMMARY OF THE INVENTION

In a first aspect, the present invention according to claim 1 provides a package for a microwave oven for evenly roasting nuts/seeds therein, the package comprising: (a) a container 100 made of a material that is suitable for microwave cooking; (b) raw nuts/seeds placed in a nut-zone within said container **100;** and (c) a capsule **101** holding a susceptor substance, wherein the nut-zone of the container **100** is sealed shut for microwave cooking; and said susceptor substance is designed to absorb microwave radiation, heat up, and subsequently assist in heat dispersion and control the amount of microwave radiation that reaches the raw nuts/seeds in the nut-zone, thereby enabling evenly roasting the nuts/seeds within the container to a desired level of texture and uniformity.

In a second aspect, the present invention provides a method for roasting nuts/seeds in a microwave oven, the method comprising the steps of: (a) placing a package of the invention in a microwave oven; (b) if needed, opening the capsule **101** or removing a lid/closure **102** therefrom to enable water vapors to exit; (c) activating the microwave oven for a time sufficient for roasting the nuts/seeds to a desired texture; and (d) allowing the package to cool so that the nuts/seeds may be safely handled.

It has further been found that longer cooling period may increase the crunchiness of certain nuts/seeds.

### BRIEF DESCRIPTION OF DRAWINGS

**Fig. 1** is a picture of an empty paper-bag shaped package according to some embodiments of the invention.
**Fig. 2** is a picture of a paper-bag shaped package with a container and a capsule holding water-based susceptor substance attached externally thereto.
**Fig. 3** illustrates a capsule holding a susceptor substance.
**Figs. 4A-4E** illustrate four possible configurations of a package with an external water/water-based susceptor substance capsule. **Figs. 4A-4D** illustrate configurations in which the capsule is attached to a bag-shaped container at different locations; and **Fig. 4E** illustrates a configuration in which the capsule is not attached to the container.
**Figs. 5A-5B** illustrate another possible configuration of a bag-shaped package according to the invention with a dedicated nuts zone and a dedicated water zone: **Fig. 5A** illustrates a package with a single capsule; and **Fig. 5B** illustrates a package with two capsules.
**Figs. 6A-6B** illustrate another configuration of a bag-shaped container with an externally attached water capsule. **Fig. 6A** is a 3-dimentional view; and **Fig. 6B** is a side view.
**Fig. 7** illustrates yet another configuration of a bag-shaped package according to the invention, in which the water capsule is located between four different bag-shaped zones/containers holding nuts.
**Fig. 8** illustrates a box-shaped package with a dedicated water zone (water capsule) and a dedicated nuts zone.
**Figs. 9A-9D** illustrate two more possible tray-shaped packages according to the invention. **Figs. 9A-9B** illustrate a tray-shaped container with a single-nuts zone; and **Figs. 9C-9D** illustrate a tray-shaped container with multiple-nuts zones.
**Figs. 10A-10D** illustrate how packages according to the invention are covered with a lid during roasting in a microwave: **Figs. 10A-10B** illustrate a baf-shaped container with a single-nuts zone covered with a lid; and **Figs. 10C-10D** illustrate a tray-shaped container with multiple-nuts zones covered with a lid.

### DETAILED DESCRIPTION OF THE INVENTION

Raw seeds and nuts exhibit prolonged shelf life. However, after heat treatment, e.g. roasting, degradation processes are accelerated, thereby substantially shortening the shelf life of the final product. This happens since during industrial roasting processes, oxygen is employed onto the seeds by hot air streams, and due to the high porosity and fat percentage in the seeds and nuts, oxygen easily enters therein and induces oxidation. In addition, heat treatment degrades the natural antioxidants, thus further promoting degradation. This, along with exposure to humidity and temperature changes during storage result with a product that is not fresh and with a non-desired taste.

Moreover, microwave works according to the principle of generating heat by friction between water molecules or -OH bonds within the heated product. Therefore, microwave heating a product with low water content may result with "cold spots" or with insufficient treated areas therein. This is also the problem when heating seeds and nuts that have extremely low water content.

Therefore, the present invention is aimed at providing packages containing raw seeds or nuts for roasting thereof in a microwave to provide on-demand roasted seeds and/or nuts, while roasting the seeds/nuts in an even manner to a desired aroma, crispiness and taste.

The present invention further provides an effective and simple method of making seeds and/or nuts in a microwave oven that does not require any preliminary preparation by the end consumer, such as drying, soaking, salting, frying, etc., by providing a package prepacked with desired seeds and/or nuts, and simply placing same in a microwave for roasting.

The fact that the seeds and nuts are roasted on-site, soon before actual consumption by the end consumer, makes sure that the final roasted seeds or nuts are fresh, have adequate aroma and desired characteristic, and are in optimal condition for consuming at the time of their consumption.

To obtain desired roasted seeds/nuts using the package and a method according to the invention, the inventor has found a way to harness the properties of a susceptor substance, such as water molecules, for reducing the damaging effect of microwaves on the seeds/nuts and to evenly distribute heat among all the seeds/nuts in the package.

The main objective of the present invention is to provide a package, in any shape and size containing raw nuts and/or seeds for roasting thereof in a microwave in a simple process, without requiring any preliminary steps or manipulation prior to use, and which results in an evenly roasted seeds/nuts having desirable texture and crunchiness. This and other more detailed and specific objects of the present invention will be apparent in view of the following description setting forth various forms of the invention.

Accordingly, in a first embodiment the present invention provides a package for cooking in a microwave oven for evenly roasting nuts/seeds therein, the package comprises: (a) a container **100** made of a material that is suitable for microwave cooking, such as paper or polymer; (b) raw nuts/seeds placed within the container **100;** and (c) a capsule **101** holding a susceptor substance, wherein the container **100** is sealed shut for microwave cooking; and the susceptor substance is designed to absorb microwave radiation, heat up, and subsequently assist in heat dispersion and control the amount of microwave radiation that reaches the raw nuts/seeds, thereby evenly roasting the nuts/seeds within the container **100** to a desired level of texture and uniformity while avoiding burning of any of the seeds/nuts within the container **100.**

In a further embodiment, the present invention provides a package for a microwave oven for evenly roasting nuts/seeds therein, the package comprising: (a) a container **100** made of a material that is suitable for microwave cooking; (b) raw nuts/seeds placed in a nut-zone within said container **100;** and (c) a capsule **101** holding a susceptor substance, wherein the nut-zone of the container **100** is sealed shut for microwave cooking; and said susceptor substance is designed to absorb microwave radiation, heat up, and subsequently assist in heat dispersion and control the amount of microwave radiation that reaches the raw nuts/seeds in the nut-zone, thereby enabling evenly roasting the nuts/seeds within the container to a desired level of texture and uniformity.

It should be noted that the term "susceptor" as used herein refers to any material used for its ability to absorb electromagnetic energy and convert it to heat.

In certain embodiments of the package according to the invention, the material from which the sealed container **100** is made of is selected from the group consisting of: paper, cardboard, plastic, and polymer, or any combination thereof.

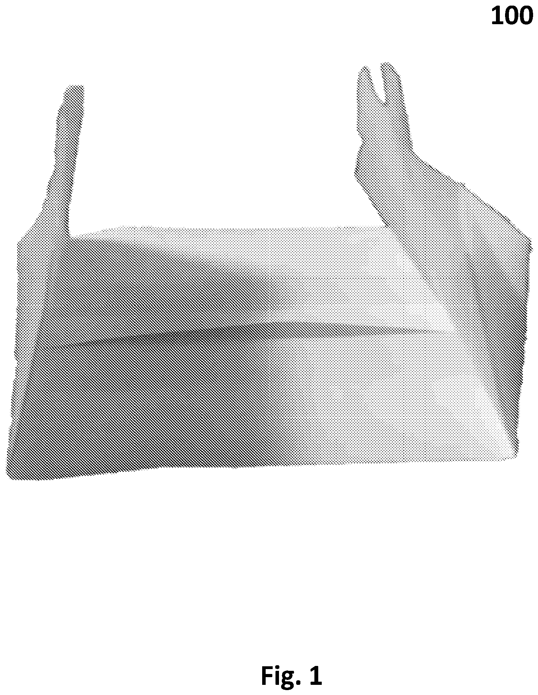

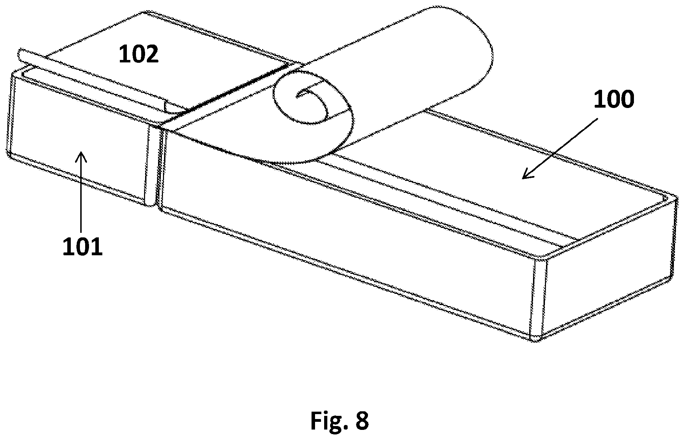

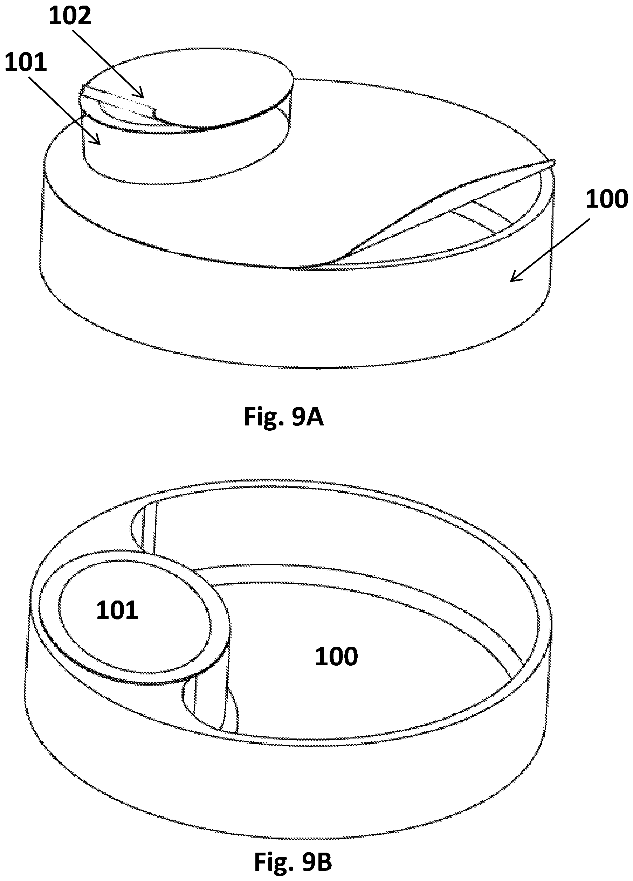

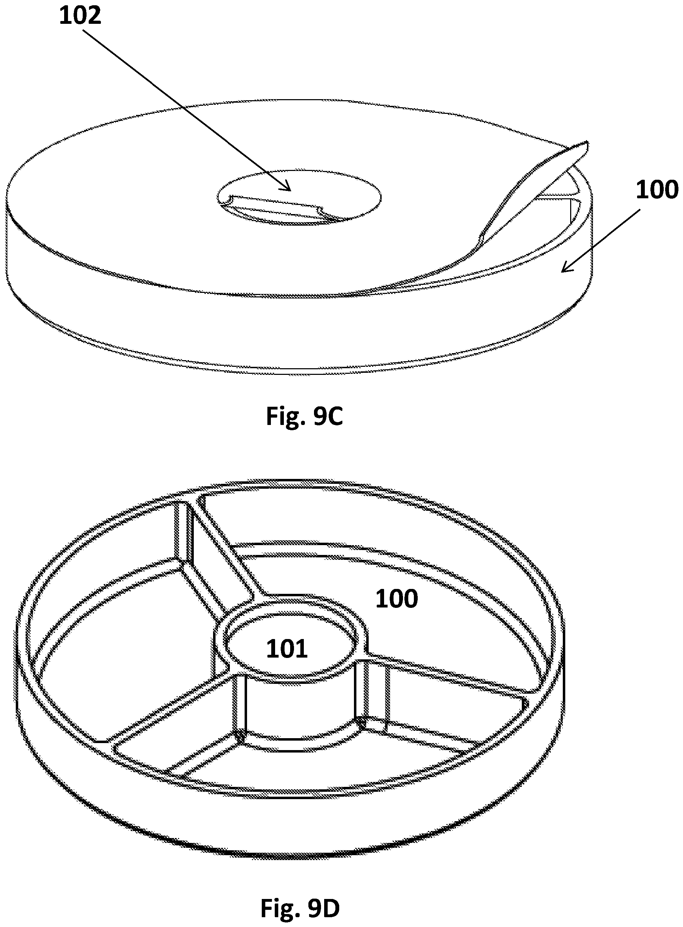

In certain embodiments of the package of the invention, the container **100** and the capsule **101** are made of a flexible material (e.g. a bag as illustrated in Figs. 1-7). Alternatively, the the container **100** and the capsule **101** are made of a rigid or semi-rigid material (e.g. a box as illustrated in Figs. 8 and 9). In further alternative embodiments, the container **100** is made of a flexible material and the capsule **101** is made of a rigid or semi-rigid material, or alternatively, the container **100** is made of a rigid or semi-rigid material and the capsule **101** is made of a flexible material.

In certain embodiments of the package according to the invention, the entire package or the container **100** only are made of an inner-layer comprising a microwave-suitable polymer and an outer-layer comprising, e.g., paper. In specific embodiments, the polymer is polyester which is coated with a heat-seal coating.

It should be noted that the capsule **101** can be in any shape and size, and the amount of the susceptor substance therein is determined, in general, according to the type, amount, size and weight of the seeds/nuts within the container **100.**

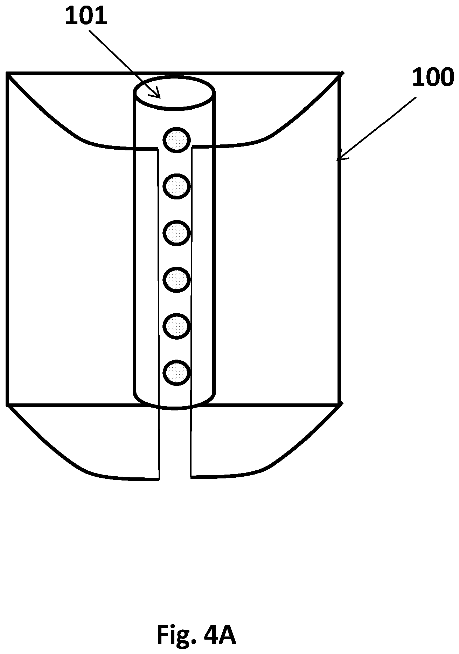

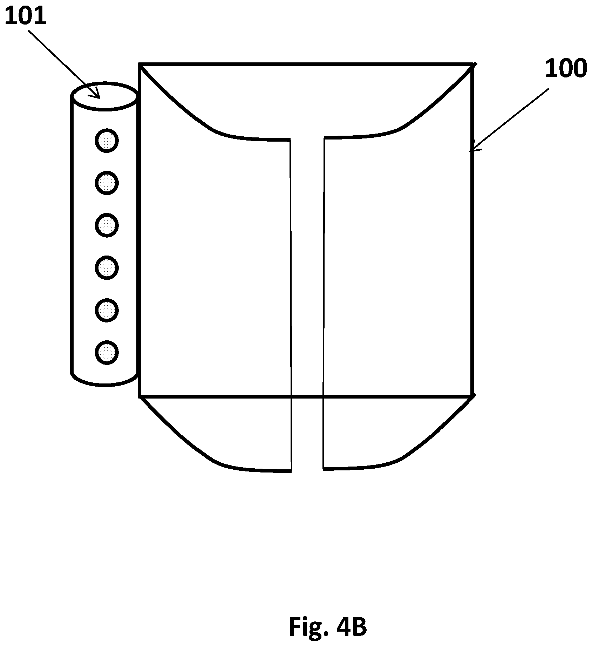

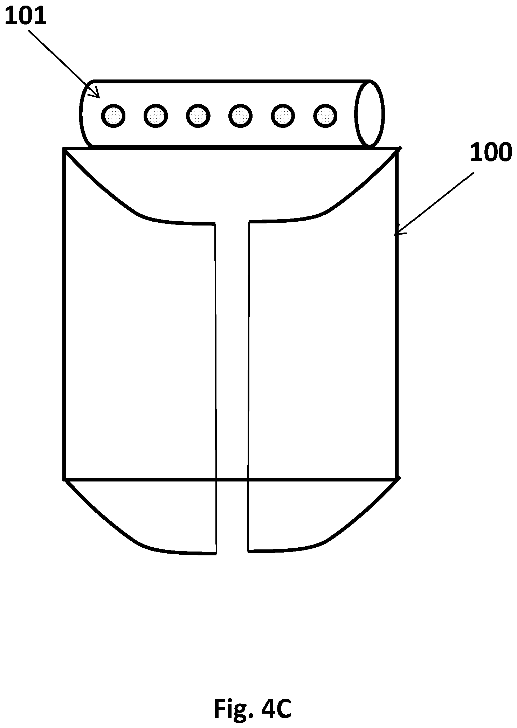

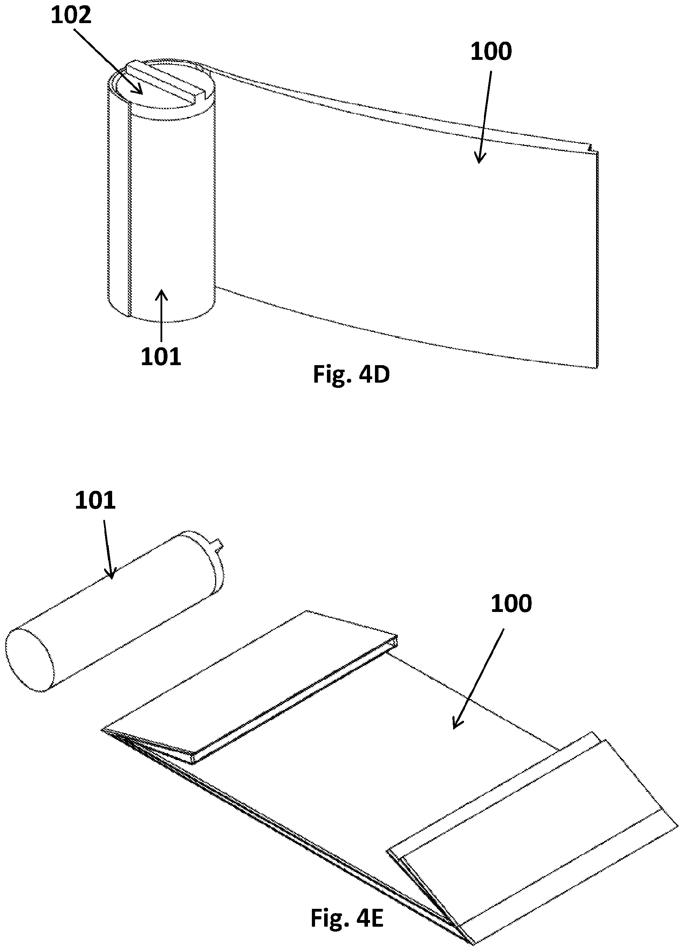

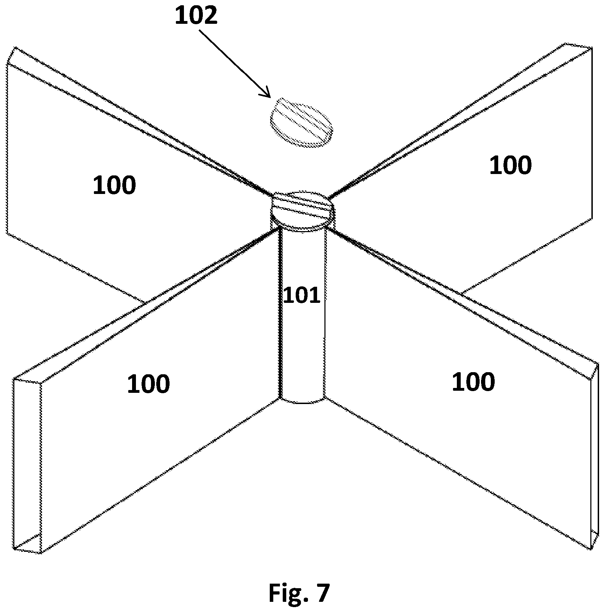

In certain embodiments of the package according to the invention, the capsule **101** is located, externally, adjacent to the container **100.** In specific embodiments, the capsule **101** is an integral part of the container **100.** Alternatively, it is manufactured individually and then attached to the container **100** by any suitable means, such as glue, welding, etc., or placed in a dedicated groove within the container **100** (see e.g. Fig. 9). In further alternative specific embodiments, the capsule **101** is removably associated with the container **100,** thereby enabling the user to remove the capsule **101** from the container **100** before or after heating in the microwave and using only the container **100** with the seeds/nuts after the roasting is complete. Non-limiting examples of such a removal container are illustrated, e.g. in Figs. 4 & 9 showing a removalble capsule **101** and in Figs. 7 & 7 illustrating a detachable capsule **101.** In more specific embodiments, the removal of the capsule **101** creates an empty space that can be used to dispose nuts/seeds shells (e.g. as illustrated in Fig. 9).

Microwave heating is based on excitation of -OH bonds. For example, in water molecules: the non-symmetric distribution of the three atoms (two hydrogen and oxygen) forming a water molecule makes it electrically unbalanced- the area around the hydrogens has a positive electric charge and the opposite side, i.e. the oxygen, is negatively charged. Forming what is known as an electric dipole. Microwave waves are formed by an oscillating electric field that attracts water molecules in a direction forcing them to orientate, but a moment later changes direction and forces them to rotate and oriented in opposite directions. The microwaves in a microwave change direction so quickly that water molecules are forced to oscillate 4,900 million times every second, while the rest of the molecules in the foodstuff are unaffected. The movement of the water molecules results in heat that in turn is transmitted to the other, unaffected, molecules simply because they hit them, thereby enabling heating the entire foodstuff.

In view of the above, when heating foodstuff with low water content, such as seeds and nuts, it is evident that there is inadequate amount of water molecules or other - OH groups to heat all parts of the heated seeds and nuts. As such, heating of seeds and nuts in a microwave usually results in "cold spots"- in which the seeds/nuts were not sufficiently roasted, or in burned areas- due to prolong heating time in an attempt to compensate and heat such potential "cold spots". In any case, it is hard to reach even heating and roasting of seeds and nuts using a microwave.

Accordingly, in certain embodiments, the present invention provides a package for roasting seeds/nuts in a microwave using a susceptor substance that is designed to absorb the microwaves' energy and transfer it into heat that is evenly dispersed across all the seeds and nuts within the container **100.** In specific embodiments, the susceptor substance is a water-based material selected from the group consisting of: water, water-containing material, water-based gel, cotton soaked with water or any combination thereof. In such cases, the water-based material provides the water molecules that are to be heated and in turn transfer the heat to the seeds and nuts within the container **100.** In more specific embodiments, the water-based substance is designed to: absorb microwave radiation, heat up, and subsequently release water vapors that assist both in even heat dispersion to all seeds/nuts within the container **100,** and to control the amount of free microwave radiation that reaches the raw nuts/seeds. In further specific embodiments, the water vapors are released outside the sealed container **100** and into the microwave, thereby creating a water vapor "cloud" around the container **100** that assists in heat dispersion and "shielding" the seeds/nuts within the container **100** from microwave radiation.

In certain embodiments of the package of the invention, the capsule **101** further comprises a removable seal **102** designed to be removed from the capsule **101** prior to heating in the microwave. In certain embodiments, there is no need to remove the seal **102** prior to heating, e.g. since the seal **102** is water-vapor permeable and thus allows water vapors to exit during heating, or since it dissolves during heating.

In alternative embodiments, the capsule **101** does not include a seal, e.g. when it is a space within the layers of the container, in which case the water vapors either remain confined between said layers, or can exit via the layers that are water-vapor permeable. In specific embodiments thereof, the container **100** is provided in a hermetically sealed bag that prevents unintentional evaporation of water until use, wherein the bag is removed prior to use.

In certain embodiments of the package according to the invention, the capsule **101** comprises at least one opening for the water vapors to exit, wherein the opening is designed to be either (i) opened manually prior to the insertion of the container **100** into the microwave; or (ii) opened automatically due to the heat generated due to the microwave's activation, and/or due to the released water vapors. In specific embodiments of the package of the invention, the seal **102** of the capsule **101** is made of heat-susceptible material that is designed to break once the water-based material within the capsule **101** reaches a certain temperature thereby allowing water-vapors to exit the capsule **101.** In further specific embodiments, the at least one opening in the capsule **101** comprises or consists-of a one-way valve that prevents liquid water from exit the capsule **101,** e.g. during storage, but enables water vapors to exit, e.g. during heating in a microwave oven.

In specific embodiments of the package of the invention, the capsule **101** or its seal **102** are made of water-vapor permeable material or comprises at least one opening covered/closed with a water-vapor permeable material for enabling water vapors to exit during microwave's activation. It should be noted, that under normal storing conditions, water vapors are not released from the susceptor substance and thus do not exit the capsule **101**.Only after / during heating in the microwave water vapors are released from the susceptor substance and can exit the capsule **101.**

In certain embodiments of the package according to the invention, the capsule **101** is positioned between an inner-layer and an outer-layer of the container **100.** In this configuration, the outer-layer of the container **100** may be permeable to water vapors so as to enable water vapors from a water-based susceptor substance to exit into the microwave oven. Alternatively, the outer-layer of the container **100** may be impermeable, in which case such water vapors may disperse between the inner-layer and the outer-layer of the container **100** and evenly surround the inner-layer holding the seeds/nuts, thereby assisting in heat dispersion and "shielding" the seeds/nuts within the inner-layer from microwave radiation. In further specific embodiments, the seal such a capsule **101** is designed to be automatically opened after microwave's activation.

In certain embodiments, the package according to any of the embodiments above further comprises an additional susceptor substance comprising of a microwave-reactive composition, such as partially metalized film, dispersed across the layer(s) of the container **100,** and designed to distribute heat evenly across the nuts/seeds within the container **100.** In such a case, the two susceptor substances create a synergistic effect that improves seeds/nuts roasting by reducing microwave heating time and improving heat dispersion during the microwave heating. In specific embodiments, the first susceptor substance is a water-based material disposed within a capsule **101** attached to the container **100,** and the second susceptor substance is embedded within the container **100.** In further specific embodiments, the second susceptor substance is embedded within the container **100** between an inner-layer and an outer-layer of the container **100.** In specific alternative embodiments, the first susceptor substance is a water-based material disposed within a capsule **101** attached to the container **100** and located between an inner-layer and an outer-layer of the container **100,** and the second susceptor substance is embedded within the inner-layer or the outer-layer of the container **100.**

In certain embodiments of the package according to any of the embodiments above, the raw nuts/seeds are shelled or unshelled and are selected from: (i) natural and untreated nuts/seeds; (ii) pre-salted and/or pre-spiced natural nuts/seeds; or (iii) pre-salted and/or pre-spiced ground or chipped natural nuts/seeds. It should be noted that the seeds/nuts can be pre-treated according to any known technique to obtain pre-salted and/or pre-spiced nuts/seeds for packaging in a container **100** according to the invention. For instance, the nuts/seeds may be mixed with water-containing salt and/or spice(s), and then let the nuts/seeds completely dry prior to their packing in the container **100.**

In certain embodiments of the package according to any of the embodiments above, the nuts/seeds raw material is selected from the group consisting of: almond, shelled and unshelled peanuts, shelled and unshelled pistachio, pine nut, cashew, watermelon seed, sunflower seed, pumpkin seed, hazelnut, pecan, chestnuts, coffee beans or any combination thereof. In specific embodiments, the raw nuts/seeds are coffee beans.

In certain embodiments of the package according to any of the embodiments above, the nuts/seeds raw material is selected from group consisting of: almonds, shelled and unshelled peanuts, shelled and unshelled pistachio, pine nut, cashew, watermelon seed, sunflower seed, pumpkin seed, hazelnut, pecan, chestnuts and any combination thereof.

In certain embodiments, the package according to any of the embodiments above comprises multiple nut-zones, each holding the same or different nuts/seeds. Such a configuration enables the end user to roast different nuts/seeds at once (in case each nut-zone contains a different type of nuts/seeds) or enables roasting larger amounts of seeds/nuts (in case the different nut-zones contain the same nuts/seeds type). In certain embodiments, the number of nut-zones in a single package is 2, 3, 4, 5, 6 or more.

In certain embodiments, the package according to any of the embodiments above comprises 50-1000 g seeds/nuts. In specific embodiments, the package comprises 50-900 g; 50-800 g; 50-700 g; 50-600 g; 50-500 g; 50-40 g; 50-300 g; 50-250 g; 50-200 g; 50-150 g; 50-100 g; about 50 g; 100-900 g; 100-800 g; 100-700 g; 100-600 g; 100-500 g; 100-400 g; 100-300 g; 100-250 g; 150-250 g; 100-200 g; about 100 g seeds/nuts.

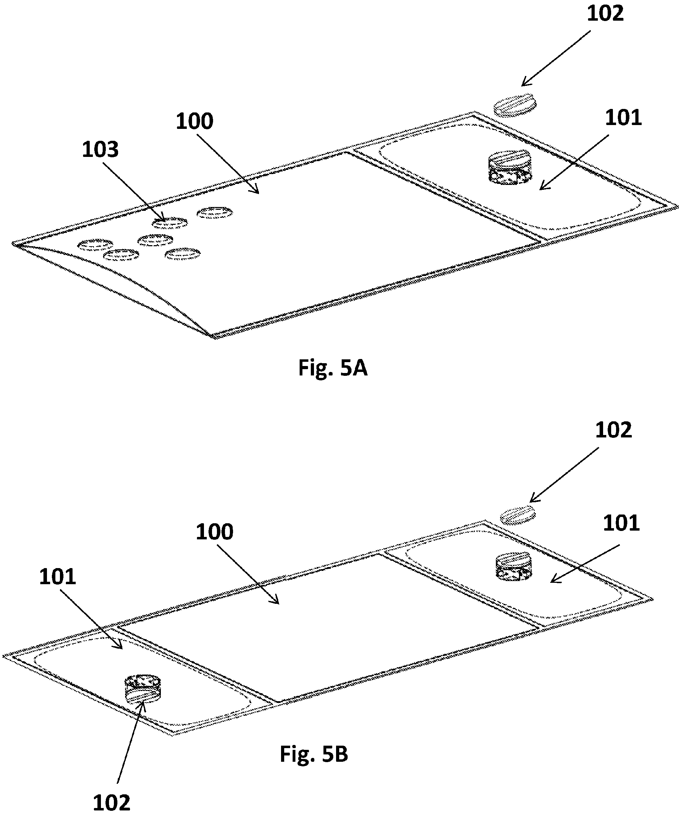

It should be noted that when large amounts of seeds/nuts are to be roasted, larger amounts of the susceptor substance might be required. This larger amount of susceptor substance may be obtained by using a larger capsule **101** or by using multiple capsules **101,** gathered or dispersed to obtain a more unified heat dispersion. Accordingly, in certain embodiments, the package according to any of the embodiments above comprises multiple capsules **101** with the same or different susceptor substance (illustrated in Fig. 5B). In specific embodiments, the package according to any of the embodiments above comprises one, two, three, four or more capsules **101.**

In certain embodiments, the package according to any of the embodiments above comprises multiple capsules **101** (e.g. Fig. 5B). Such a configuration may be needed when using packages with multi nut-zones and/or large container **100** holding large amount of seeds/nuts, which require larger amounts of water-vapors for reaching optimum roasting.

The present invention further provides a method for roasting nuts/seeds in a microwave oven in a way that yields evenly roasted seeds/nuts having desired crispiness and taste. The method is designed to enable a consumer to roast seeds/nuts on demand whenever he/she desires in a simple, hustle-free process.

Accordingly, in certain embodiments, the present invention provides a method for roasting nuts/seeds in a microwave oven, the method comprising the steps of: (a) placing a package of the invention in a microwave oven; (b) if needed, opening the capsule **101** or removing a lid/closure **102** therefrom to enable water vapors to exit; (c) activating the microwave oven for a time sufficient for roasting the nuts/seeds to a desired texture; and (d) allowing the package to cool so that the nuts/seeds may be safely handled.

It should be noted that the term "time sufficient" is to be determine according to various criteria, such as: the type of seeds/nuts to be roasted, according to the amount of seeds/nuts within a container **100,** as well as according to the microwave's intensity and the amount and the type of the susceptor. For instance, when using a container **100** containing 60-100 gr. of seeds/nuts, and the microwave's intensity is about 800W and water based susceptor containing 10-80 g material, the overall activation time is between 2 to 8 min. However, for the same amount of material and susceptor, when using a microwave's intensity of about 600W, the overall activation time is between 4 to 12 min.

In certain embodiments of the method according to the invention, after microwave heating, the container **100** is left to be cooled for a time period of from about 5 to about 30 min in order to let the roasting of nuts/seeds to finalize and reach a desired texture and crunchiness. Another reason for the cooling step is to prevent unintentional burn of the consumer from hot seeds/nuts.

In certain embodiments, the method according to any of the embodiments above further comprises a step prior to the activation of the microwave in step (b), of opening the capsule **101** or removing a closure therefrom to enable water vapors to exit the capsule **101.**

In certain embodiments of the method according to any of the embodiments above, the nuts/seeds have been pre-salted and/or pre-spiced by mixing thereof with water-containing salt and/or spice(s), and allowing the nuts/seeds to completely dry prior to their packing in the container **100.**

It should be noted that the package of the invention can be placed within the microwave in any position and orientation, such as standing or laying.

In certain embodiments of the method according to any of the embodiments above, the nuts/seeds raw material is selected from the group consisting of: almond, shelled and unshelled peanuts, shelled and unshelled pistachio, pine nut, cashew, watermelon seed, sunflower seed, pumpkin seed, hazelnut, pecan, chestnuts, coffee beans or any combination thereof. In specific embodiments, the raw nuts/seeds are coffee beans.

There is a large diversity of microwave devices in the market, which belongs to many manufacturers, each with its own power output, intensity, and uniformity of wave density within the oven chamber. Accordingly, in order to improve uniformity of roasting when using different microwave devices, it is advisable to use a coverlid placed over the food-stuff placed therein. Accordingly, in order to avoid non-uniform roasting simply because a different microwave was used, it is suggested to add such a coverlid on top of the packages of the invention during the roasting of the seeds/nuts to thereby enable overcoming the above problems and obtain evenly and uniform roasted seeds/nuts.

Such coverlids are widely known and used, and can be made of any microwave-resistant material such as polypropylene, silicone or any other polymer that tolerates microwave radiation. In certain embodiments, the lid's upper surface is located about 1-8 cm above the top edge of the container **100** and/or capsule **101.** The coverlid is designed to act as a "water humidity guard dome" that is intended to keep water vapors/steam contained underneath it, therefore keeping such water vapors/steam near the container **100** and at the container's environment during the activation of the microwave (i.e. the roasting process) and thus assisting in enhancing roasting uniformity.

In certain embodiments, the coverlid may comprise vent holes that allow some of the water vapors/stem to exit in order to reduce the pressure within/underneath the coverlid due to the generation of such water vapors/stem during microwave activation.

Accordingly, in certain embodiment, the method of the invention for roasting seeds/nuts in a microwave, further comprises a step of covering the container(s) **100** and capsule(s) **101** with a coverlid before activating the microwave.

The invention will now be illustrated by reference to the accompanying drawings which are to be considered only as representative examples of possible embodiments of packages of the invention.

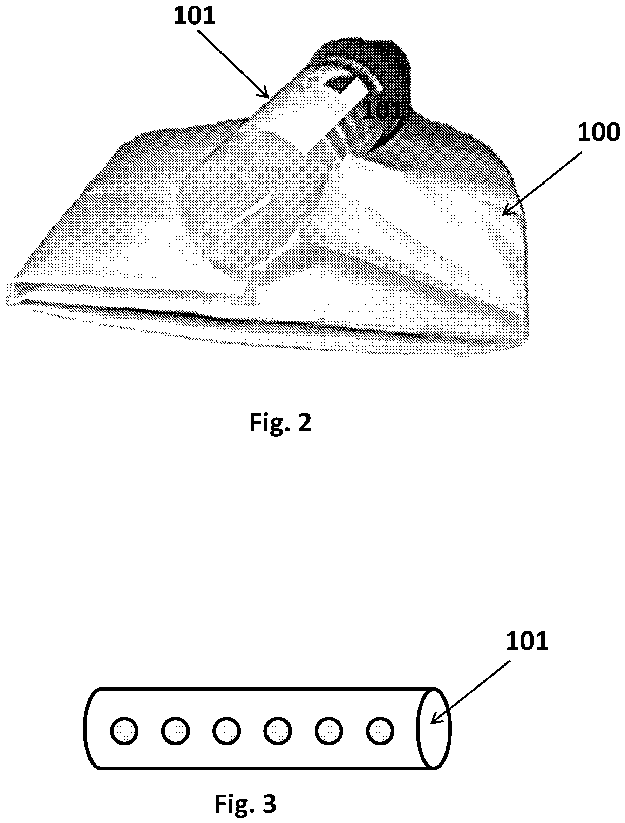

Fig. 1 illustrates an empty paper-bag shaped container **101** according to some embodiments of the invention. Nuts/seeds are packed and sealed within this bag, to which a capsule **101** with a water-based susceptor substance is associated with (Figs. 1, 2 and 4E) or connected (illustrated in Fig. 5A). The attachment of the capsule **101** to the container **100** may be externally (Fig. 2) in any desired configuration/way (Fig. 4) or internally (not shown). Alternatively, the capsule **101** may be dispered within the layers of the container itself (e.g. within the paper layers of the bag in Fig. 1).

Figs. 5A-5B illustrate a bag-shaped package according to the invention, in which the bag is divided into two associated/attached sections: a container nut-zone **100** holding nuts/seeds **103** and a flexible capsule **101** with a subsector substance. It should be noted that the association between the container **100** and the capsule **101** can be done in any way (welding, gluing, or even manufactured together), and optionally can allow the user to detach the container **100** from the capsule **101** after heating in the microwave, e.g. by using a pre-tear line in the connection area. As illustrated, the lid **102** is removed / screwed-off the capsule **101** prior to heating in the microwave.

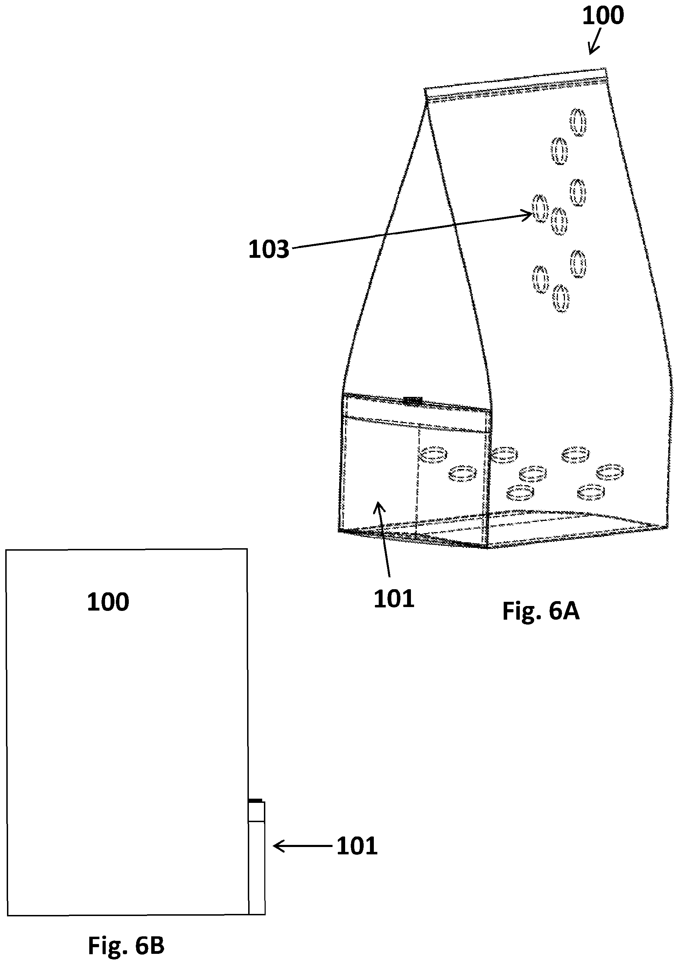

Figs. 6A-6B illustrate a bag-shaped package with a container **100** holding nuts/seeds **103** with an externally attached water capsule **101.** The capsule **101** may be made either from a flexible material or rigid. The capsule **101** may be easily removed from the container **100** after heating in the microwave, thereby enabling consuming the roasted seeds/nuts directly from the container **100.**

Fig. 7 illustrates a configuration of a package of the invention that comprises four individual bag-shaped containers **100** attached to a center capsule **101.** After roasting, the different containers **100** can be separated from the capsule **101.** As illustrated, the lid **102** is removed/screwed-off the capsule **101** prior to heating in the microwave. Each container **100** can hold the same or different type of seeds/nuts.

Fig. 8 illustrates a rigid box-shaped package comprising a container **100** and a water capsule **101** dedicated water zone (water capsule) and a dedicated nuts zone. As illustrated, the lid **102** of the capsule may be removed prior to heating in the microwave. Alternatively, the lid **102** may be vapor permeable or designed to be automatically dissolved during heating, in which case it does not need to be removed prior to heating.

Figs. 9A-9D illustrate two possible tray-shaped packages according to the invention: Figs. 9A-9B illustrate a configuration of a single nut-zone container **100** with a dedicated groove at its perimeter for holding the capsule **101;** and Figs. 9C-9D illustrate a configuration of a multiple nut-zones container **100** with a dedicated groove at the middle thereof for holding the capsule **101.** Each container **100** can hold the same or different type of seeds/nuts. As illustrated, the lid **102** of the capsule may be removed prior to heating in the microwave. Alternatively, the lid **102** may be vapor permeable or designed to be automatically dissolved during heating, in which case it does not need to be removed prior to heating. As illustrated, the capsule **102** may be removed after heating leaving a tray with a space that can be used, e.g. for placing seeds/nuts debris and shells.

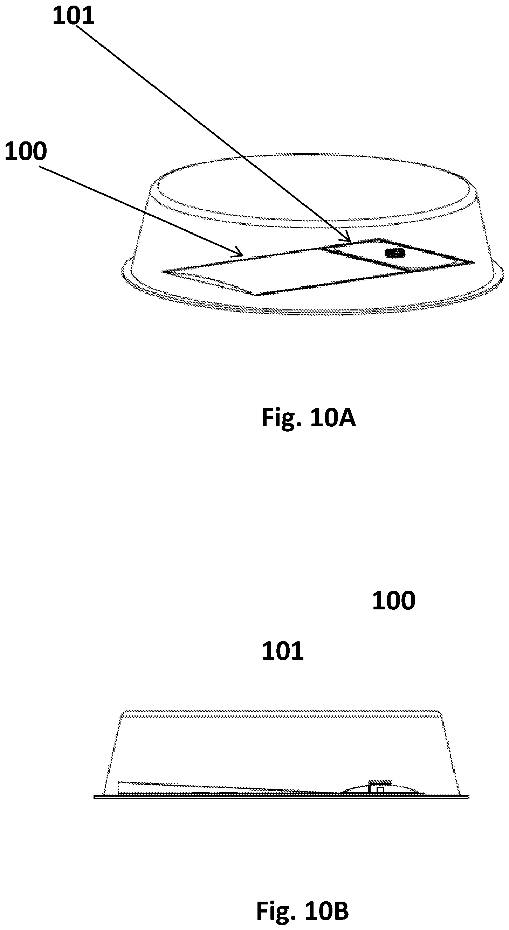

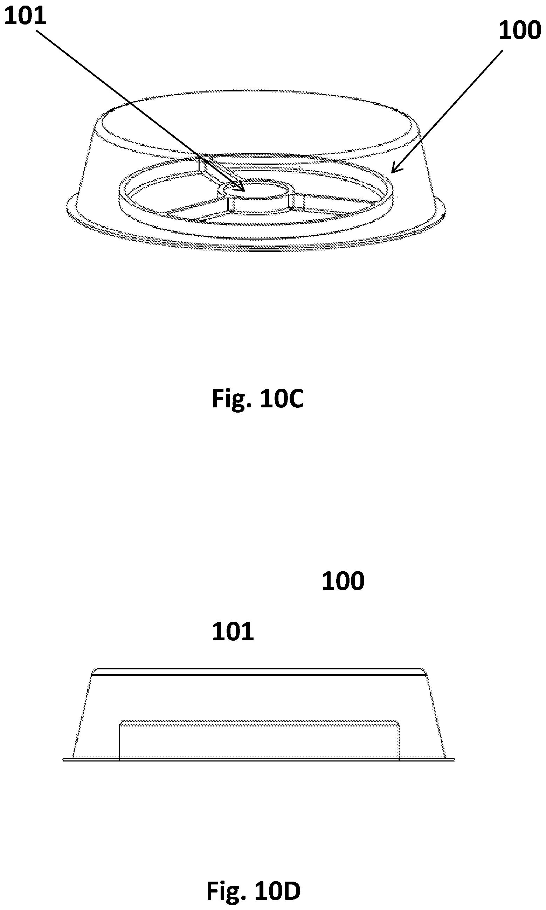

Figs. 10A-10B illustrate a bag-shaped package according to the invention when placed under a coverlid (inside a microwave that is not shown): Fig. 10A is a 3-dimentional view, and Fig. 10B is a side-view. Figs. 10C-10D illustrate a tray-shaped package according to the invention when placed under a coverlid (inside a microwave that is not shown): Fig. 10C is a 3-dimentional view, and Fig. 10D is a side-view.

The invention will now be illustrated by the following non-limiting examples.

### EXAMPLES

### Example 1: Almonds

60 g of raw almonds **103** are packed in a bag-shaped container **100.** The container is composed of PET at the inner side and paper at the outer side and the container is sealed.

The almonds are placed in the horizontal part of container **100.** A capsule **101,** holding 50 g of water, is attached externally to the bag-shaped container **100.** After opening the seal in the capsule **101,** the container **100** is inserted into a microwave oven which is activated for 4:40 min at 800 W. The container is left to cool for 6 min. The results show very uniform roasting of the almonds.

### Example 2: Unshelled peanuts

60 g of raw unshelled peanuts **103** are packed in a bag-shaped container **100.** The container is composed of PET at the inner side and paper at the outer side and the container is sealed. The peanuts are placed in the horizontal part of container **100.** A capsule **101,** holding 20 g of water, and equipped with one-way valves is attached externally to the container 100. The container **100** is inserted into a microwave oven which is activated for 3:30 min at 800 W. The container is left to cool for 6 min. The results show very uniform roasting of the unshelled peanuts.

### Example 3: Shelled peanuts

60 g of raw peanuts **103** are packed in a bag-shaped container **100,** made of cardboard. The peanuts are placed in the horizontal part of container **100.** A capsule **101** equipped with one-way valves and holding 50 g of water is attached externally to the container **100.** The container **100** is inserted into a microwave oven which is activated for 4:40 min at 800 W. The container is left to cool for 6 min. The results show very uniform roasting of the shelled peanuts.

### Example 4: Pre-salted almonds

100 g of raw almonds **103** have been pre-salted by submerging into salt-water for 30 min, followed by drying in cold air at about 10-20°C, until completely dry.

60 g of the pre-salted almonds are packed in a bag-shaped container **100.** The container is composed of PET at the inner side and paper at the outer side and the container is sealed. The almonds are placed in the horizontal part of container **100.** A capsule **101,** holding 50 g of water, is attached externally to the container **100.** After opening the seal in the capsule **101,** the container **100** is inserted into a microwave oven which is activated for 4:30 min at 800 W. The container is left to cool for 6 min. The results show very uniform roasting of the almonds.

### Example 5: Almond chips

60 g of raw almond chips **103** are packed in a bag-shaped container **100,** made of cardboard. The peanuts are placed in the horizontal part of container **100.** A capsule **101** equipped with one-way valves and holding 50 g of water-based gel is attached externally to the container **100.** The gel has been prepared from 47.5 g of water and 2.5 g of gelatin. The container **100** is inserted into a microwave oven which is activated for 6 min at 600 W. The container is left to cool for 6 min. The results show very uniform roasting of the almond chips.

### Example 6: shelled pistachios

60 g of raw peanuts 103 are packed in a bag-shaped container **100.** The container is composed of PET at the inner side and paper at the outer side and the container is sealed. The pistachios are placed in the horizontal part of container **100.** A capsule **101** equipped with one-way valves and holding 50 g of water is attached externally to the container **100.** The container **100** is inserted into a microwave oven which is activated for 4:50 min at 800 W. The container **100** is left to cool for 6 min. The results show very uniform roasting of the shelled pistachios.

### Example 7: Sliced almonds in a two-cell bag-shaped container (Fig. 5A)

100 g of sliced almonds **103** packed in the nuts zone of a bag-shaped container **100.** 20 g water is placed in the water zone **101** of the container **100.** The container **100** is placed in a microwave oven after opening the seal **102** of the water zone. The microwave is activated for ~4:10 min at 800W. The container **100** is left to cool for 10 min. The results show very uniform roasting of the sliced almonds.

### Example 8: Cashews in polypropylene tray (Fig. 9)

450 g cashews **103** are packed in the nuts zone in a polypropylene (pp) tray **100** (Fig. 9) sealed with a pp sheet. 20g of water are packed in a detachable pp cup **102** sealed with pp sheet. The tray **100** is inserted in a microwave oven after removing the pp sheet seal from the water cup, and the oven is activated for 5:30 min at 800W. The tray **100** is left to cool for 15 min. The results show very uniform roasting of the cashews.

### Example 9: Diced peanuts in polypropylene tray (Fig. 8)

450 g of diced peanuts **103** are packed in a PP tray **100** (Fig 8) in the nuts zone sealed with pp sheet. 20 g of water are placed in the water zone **101** of the tray **100** sealed with pp sheet. The tray is placed in a microwave oven after removal of the pp seal from the water zone, and the oven is activated for 7:20 min at 800W. The results show very uniform roasting of the diced peanuts.

### Example 10: Coffee beans roasting with a coverlid

50 g of coffee beans are packed in a sealed bag-shaped container **100** that comprises a PET inner layer and a paper outer later. Coffee beans are placed in the container's horizontal part, and two capsules **101,** each holding 50g of water, are attached externally to the container.

After opening the seal of the capsules **101,** the container **100** is inserted into a microwave oven and a PP lid is placed on top of the container **100** and capsules **101.** Then, the microwave is activated for about 9:40 min at 600W. The container **100** is left to cool for about 10 min. The results show very uniform roasting of the coffee beans.

## Claims

1. A package for a microwave oven for evenly roasting nuts/seeds therein, the package comprising:
a) a container (100) made of a material that is suitable for microwave cooking;
b) raw nuts/seeds (103) placed in a nut-zone within said container (100);
wherein
- said nut-zone of the container is sealed shut for microwave cooking;
**characterised in that** the package comprises a capsule (101) holding a susceptor substance, wherein
said susceptor substance is a water-based material designed to absorb microwave radiation, heat up, and subsequently release water vapors that assist in heat dispersion and control the amount of microwave radiation that reaches the raw nuts/seeds (103) in the nut-zone,
thereby enabling evenly roasting the nuts/seeds within the container (100) to a desired level of texture and uniformity.

2. The package according to claim 1, wherein said capsule (101) is an integral part of said container (100), optionally disposed/positioned between an inner-layer and an outer-layer of said container (100).

3. The package according to claim 1, wherein said capsule (101) is removably associated with said container (100).

4. The package according to claim 1, wherein: (i) said container (100) and said capsule (101) are made of a flexible material; (ii) said container (100) is made of a flexible material and said capsule (101) is made of a rigid or semi-rigid material; or (iii) said container (100) is made of a rigid or semi-rigid material and said capsule (101) is made of a flexible material.

5. The package according to claim 1, wherein said container (100) and said capsule (101) are made of a rigid or semi-rigid material.

6. The package according to claim 1, wherein said water-based susceptor material is selected from the group consisting of: water, water-containing material, water-based gel, and cotton soaked with water, or any combination thereof.

7. The package according to claim 6, wherein said capsule (101) comprises at least one opening for water vapors to exit, wherein said at least one opening is designed to be opened either manually prior to the insertion of the package into the microwave, or automatically due to the: (i) released water vapors, and/or (ii) heat generated due to the microwave's activation, wherein said at least one opening optionally comprises or consists-of a one-way valve.

8. The package according to claim 6, wherein said capsule (101) is made of water-vapor permeable material or comprises at least one opening covered/closed with a water-vapor permeable material for enabling water vapors to exit during microwave's activation.

9. The package according to claim 1, further comprising an additional susceptor substance comprising of a microwave-reactive composition, dispersed across the layer(s) of said container (100), and designed to distribute heat evenly across the nuts/seeds (103) within said container (100).

10. The package according to claim 1, wherein said container (100) comprises: (i) multiple nut-zones, each holding the same or different nuts/seeds (103); and/or (ii) two or more capsules (101).

11. The package according to claim 1, wherein said raw nuts/seeds (103) are shelled or unshelled and are selected from: (i) natural and untreated nuts/seeds; (ii) pre-salted and/or pre-spiced natural nuts/seeds; (iii) pre-salted and/or pre-spiced ground or chipped natural nuts/seeds or (iv) coffee beans.

12. A method for roasting nuts/seeds in a microwave oven, the method comprising the steps of:
a) placing a package according to claim 1 in a microwave oven;
b) if needed, opening the capsule(s) (101) or removing a seal/lid/closure(s) (102) therefrom to enable water vapors to exit;
c) activating the microwave oven for roasting the nuts/seeds (103); and
d) allowing the package to cool so that the nuts/seeds (103) may be safely handled.

13. The method according to claim 12, further comprising a step of: covering said package with a lid to entrap water vapors; or covering the container(s) (100) and capsule(s) (101) with a coverlid before activating the microwave.

14. The method according to claim 12, wherein the nuts/seeds (103) have been pre-salted and/or pre-spiced by mixing thereof with water-containing salt and/or spice(s), and allowing the nuts/seeds to completely dry prior to their packing in the container.

15. The method according to claim 12, wherein the nuts/seeds (103) are coffee beans.

## Patentansprüche

1. Verpackung für einen Mikrowellenofen zum gleichmäßigen Rösten von Nüssen/Samen darin, wobei die Verpackung aufweist:
a) einen Behälter (100) aus einem Material, das für das Kochen in der Mikrowelle geeignet ist;
b) rohe Nüsse/Samen (103), die in einer Nusszone innerhalb des Behälters (100) platziert sind;
wobei
- die Nusszone des Behälters zum Kochen in der Mikrowelle versiegelt ist;
**dadurch gekennzeichnet, dass** die Verpackung eine Kapsel (101) aufweist, die eine Suszeptorsubstanz vorhält, wobei die Suszeptorsubstanz ein Material auf Wasserbasis ist, das ausgelegt ist, Mikrowellenstrahlung zu absorbieren, sich zu erwärmen und anschließend Wasserdämpfe freizusetzen, die bei der Wärmeverteilung helfen und die Menge an Mikrowellenstrahlung steuern, welche die rohen Nüsse/Samen (103) in der Nusszone erreicht,
dadurch ein gleichmäßiges Rösten der Nüsse/Samen innerhalb des Behälters (100) bis zu einem gewünschten Textur- und Gleichmäßigkeitsniveau ermöglicht wird.

2. Verpackung nach Anspruch 1, wobei die Kapsel (101) ein integraler Bestandteil des Behälters (100) ist, der optional zwischen einer inneren Schicht und einer äußeren Schicht des Behälters (100) angeordnet/positioniert ist.

3. Verpackung nach Anspruch 1, wobei die Kapsel (101) dem Behälter (100) abnehmbar zugeordnet ist.

4. Verpackung nach Anspruch 1, wobei: (i) der Behälter (100) und die Kapsel (101) aus einem flexiblen Material hergestellt sind; (ii) der Behälter (100) aus einem flexiblen Material hergestellt ist und die Kapsel (101) aus einem starren oder halbstarren Material hergestellt ist; oder (iii) der Behälter (100) aus einem starren oder halbstarren Material hergestellt ist und die Kapsel (101) aus einem flexiblen Material hergestellt ist.

5. Verpackung nach Anspruch 1, wobei der Behälter (100) und die Kapsel (101) aus einem starren oder halbstarren Material hergestellt sind.

6. Verpackung nach Anspruch 1, wobei das Suszeptormaterial auf Wasserbasis ausgewählt ist aus der Gruppe bestehend aus: Wasser, wasserhaltigem Material, Gel auf Wasserbasis und mit Wasser getränkter Baumwolle oder einer beliebigen Kombination daraus.

7. Verpackung nach Anspruch 6, wobei die Kapsel (101) mindestens eine Öffnung für den Austritt von Wasserdämpfen aufweist, wobei die mindestens eine Öffnung ausgelegt ist, entweder manuell vor dem Einlegen der Verpackung in die Mikrowelle oder automatisch aufgrund der: (i) freigesetzten Wasserdämpfe und/oder (ii) aufgrund der Aktivierung der Mikrowelle erzeugten Wärme geöffnet zu werden, wobei die mindestens eine Öffnung optional ein Einwegventil aufweist oder aus einem solchen besteht.

8. Verpackung nach Anspruch 6, wobei die Kapsel (101) aus wasserdampfdurchlässigem Material hergestellt ist oder mindestens eine Öffnung aufweist, die mit einem wasserdampfdurchlässigen Material bedeckt/verschlossen ist, um den Austritt von Wasserdämpfen während der Mikrowellenaktivierung zu ermöglichen.

9. Verpackung nach Anspruch 1, ferner aufweisend eine zusätzliche Suszeptorsubstanz, die eine mikrowellenreaktive Zusammensetzung aufweist, über die Schicht(en) des Behälters (100) verteilt ist und ausgelegt ist, Wärme gleichmäßig über die Nüsse/Samen (103) innerhalb des Behälters (100) zu verteilen.

10. Verpackung nach Anspruch 1, wobei der Behälter (100) aufweist: (i) mehrere Nusszonen, die jeweils dieselben oder unterschiedliche Nüsse/Samen (103) vorhalten; und/oder (ii) zwei oder mehr Kapseln (101).

11. Verpackung nach Anspruch 1, wobei die rohen Nüsse/Samen (103) geschält oder ungeschält sind und ausgewählt sind aus: (i) natürlichen und unbehandelten Nüssen/Samen; (ii) vorgesalzenen und/oder vorgewürzten natürlichen Nüssen/Samen; (iii) vorgesalzenen und/oder vorgewürzten gemahlenen oder gehackten natürlichen Nüssen/Samen oder (iv) Kaffeebohnen.

12. Verfahren zum Rösten von Nüssen/Samen in einem Mikrowellenofen, wobei das Verfahren umfasst die Schritte des:
a) Platzierens einer Verpackung nach Anspruch 1 in einem Mikrowellenofen;
b) falls erforderlich, Öffnens der Kapsel(n) (101) oder Entfernens eines oder mehrerer Siegel/Deckel/Verschlüsse (102) davon, um den Austritt von Wasserdampf zu ermöglichen;
c) Aktivierens des Mikrowellenofens zum Rösten der Nüsse/Samen (103); und
d) Abkühlenlassens der Verpackung, sodass die Nüsse/Samen (103) sicher gehandhabt werden können.

13. Verfahren nach Anspruch 12, ferner umfassend einen Schritt des: Abdeckens der Verpackung mit einem Deckel, um Wasserdämpfe einzuschließen; oder Abdeckens des/der Behälter(s) (100) und der Kapsel(n) (101) mit einem Deckel, bevor die Mikrowelle aktiviert wird.

14. Verfahren nach Anspruch 12, wobei die Nüsse/Samen (103) vorgesalzen und/oder vorgewürzt wurden, indem sie mit wasserhaltigem Salz und/oder Gewürz(en) gemischt wurden und die Nüsse/Samen vor dem Verpacken derselben in den Behälter vollständig trocknen gelassen werden.

15. Verfahren nach Anspruch 12, wobei die Nüsse/Samen (103) Kaffeebohnen sind.

## Revendications

1. Un emballage pour un four à micro-ondes permettant de torréfier uniformément des fruits à coque/graines à l'intérieur de lui, l'emballage comprenant :
a) un récipient (100) en un matériau adapté à la cuisson par micro-ondes ;
b) des fruits à coque/graines (103) crûs, placés dans une zone à fruits à coque à l'intérieur dudit récipient (100) ;
- ladite zone à fruits à coque du récipient étant fermée hermétiquement pour la cuisson par des micro-ondes ;
**caractérisé en ce que** l'emballage comprend une capsule (101) contenant une substance susceptrice,
ladite substance susceptrice est une matière à base d'eau conçue pour absorber le rayonnement micro-onde, pour chauffer et libérer ensuite des vapeurs d'eau qui aident à la dispersion de la chaleur et qui contrôlent la quantité de rayonnement micro-onde qui atteint les fruits à coque/graines (103) crûs dans la zone à fruits à coque,
permettant ainsi de torréfier uniformément les fruits à coque/graines à l'intérieur du récipient (100) à un niveau souhaité de texture et d'uniformité.

2. L'emballage selon la revendication 1, dans lequel ladite capsule (101) fait partie intégrante dudit récipient (100), étant optionnellement disposée/positionnée entre une couche interne et une couche externe dudit récipient (100).

3. L'emballage selon la revendication 1, dans lequel ladite capsule (101) est associée de manière amovible au récipient (100).

4. L'emballage selon la revendication 1, dans lequel : (i) ledit récipient (100) et ladite capsule (101) sont constitués d'un matériau souple ; (ii) ledit récipient (100) est réalisé en un matériau souple et ladite capsule (101) est réalisée en un matériau rigide ou semi-rigide ; ou (iii) ledit récipient (100) est fait d'un matériau rigide ou semi-rigide et ladite capsule (101) est faite d'un matériau flexible.

5. L'emballage selon la revendication 1, dans lequel ledit récipient (100) et ladite capsule (101) sont réalisés en un matériau rigide ou semi-rigide.

6. L'emballage selon la revendication 1, dans lequel ladite matière susceptrice à base d'eau est choisi parmi le groupe consistant en : de l'eau, une matière contenant de l'eau, un gel à base d'eau et du coton imbibé d'eau, ou toute combinaison de ceux-ci.

7. L'emballage selon la revendication 6, dans lequel ladite capsule (101) comprend au moins une ouverture pour la sortie des vapeurs d'eau, ladite au moins une ouverture étant conçue pour être ouverte soit manuellement avant l'insertion de l'emballage dans le four à micro-onde, soit automatiquement sous l'effet : (i) des vapeurs d'eau libérées, et/ou (ii) de la chaleur générée par l'activation du four à micro-onde, ladite au moins une ouverture comprenant optionnellement, ou consistant, en une soupape unidirectionnelle.

8. L'emballage selon la revendication 6, dans lequel ladite capsule (101) est constituée d'un matériau perméable à la vapeur d'eau ou comprend au moins une ouverture recouverte/fermée d'un matériau perméable à la vapeur d'eau pour permettre aux vapeurs d'eau de sortir lors de l'activation du four à micro-onde.

9. L'emballage selon la revendication 1, comprenant en outre une substance susceptrice supplémentaire constituée d'une composition réactive aux micro-ondes, dispersée sur la ou les couches dudit récipient (100), et conçue pour répartir la chaleur uniformément sur les fruits à coque/graines (103) à l'intérieur dudit récipient (100).

10. L'emballage selon la revendication 1, dans lequel ledit récipient (100) comprend : (i) de multiples zones à fruits à coque, chacune contenant des fruits à coque/graines (103) similaires ou différentes ; et/ou (ii) deux capsules (101) ou plus.

11. L'emballage selon la revendication 1, dans lequel lesdits fruits à coque/graines (103) sont décortiqués ou non décortiqués et sont choisis parmi : (i) des fruits à coque/graines naturels et non traités ; (ii) des fruits à coque/graines naturels pré-salés et/ou pré-épicés ; (iii) des fruits à coque/graines naturelles moulus ou concassés pré-salés et/ou pré-épicés ou (iv) des grains de café.

12. Un procédé de torréfaction de fruits à coque/graines dans un four à micro-ondes, le procédé comprend les étapes suivantes :
a) placer un emballage selon la revendication 1 dans un four à micro-ondes ;
b) si nécessaire, ouvrir la ou les capsule(s) (101) ou retirer un ou des joint(s)/couvercle(s)/fermeture(s) (102) de celle-ci pour permettre à des vapeurs d'eau de sortir ;
c) activer le four à micro-ondes pour torréfier les fruits à coque/graines (103) ; et
d) laisser refroidir l'emballage afin que les fruits à coque/graines (103) puissent être manipulés en toute sécurité.

13. Le procédé selon la revendication 12, comprenant en outre une étape consistant à : recouvrir ledit emballage avec un couvercle pour piéger les vapeurs d'eau ; ou recouvrir le(s) récipient(s) (100) et capsule(s) (101) avec un couvercle avant d'activer le micro-ondes.

14. Le procédé selon la revendication 12, dans lequel les fruits à coque/graines (103) ont été pré-salés et/ou pré-épicés en les mélangeant avec du sel et/ou des épices contenant de l'eau et en laissant les fruits à coque/graines complètement sécher avant leur emballage dans le récipient.

15. Le procédé selon la revendication 12, dans lequel les fruits à coque/graines (103) sont des grains de café.
